# EUROPÄISCHE PATENTSCHRIFT

(11) **EP 2 301 825 B1**
(45) Veröffentlichungstag und Bekanntmachung des Hinweises auf die Patenterteilung: **16.01.2013**
(21) Anmeldenummer: 10178808.1
(22) Anmeldetag: 23.09.2010
(51) Int. Cl.: B62D 25/08

(54) **Frontendmodul für ein Kraftfahrzeug**
Front end module for a motor vehicle
Module avant pour véhicule automobile

(30) Priorität: 29.09.2009 DE 102009043363
(43) Veröffentlichungstag der Anmeldung: 30.03.2011
(73) Patentinhaber: HBPO GmbH, 59552 Lippstadt (DE)
(72) Erfinder: Opperbeck, Guido, 59558 Lippstadt (DE); Schöning, Ralf, 33442 Herzebrock-Clarholz (DE)
(74) Vertreter: Vogel, Andreas

(56) Entgegenhaltungen:
- EP-A2- 1 977 957
- WO-A1-2009/072673
- US-A1- 2004 100 127

## Beschreibung

### Beschreibung

Die Erfindung betrifft ein Frontendmodul für ein Kraftfahrzeug, mit einem Montageträger, an dem Funktionsbauteile des Kraftfahrzeuges angeordnet sind und der an einer tragenden Struktur des Fahrzeuges befestigbar ist, wobei der Montageträger einen oberen und unteren Querträger aufweist, die miteinander über Vertikalträger verbunden sind. Des Weiteren bezieht sich die Erfindung auf einen Montageträger für ein derartiges Frontendmodul.

Frontendmodule bilden einen die Fahrzeugstruktur versteifenden Abschluss eines Vorderwagens eines Kraftfahrzeuges und weisen zudem Funktionsbauteile wie z. B. Scheinwerfer oder Stoßfänger auf.

Es sind Frontendmodule für ein Kraftfahrzeug bekannt, die einen großflächigen, aus Kunststoff gefertigten Montageträger aufweisen. Hierbei weist der Montageträger Querträger und Vertikalträger zur Versteifung des Vorderwagens und Aufnahmen für verschiedene Funktionsbauteile als monolithisches Bauteil auf. Zudem nimmt der Montageträger Kräfte, z. B. einer Motorklappe auf und hat somit eine tragende Funktion. Nachteilig hierbei ist, dass bei einer Verformung oder Zerstörung eines Abschnittes des Montageträgers in Folge eines Unfalles des Kraftfahrzeugs der gesamte Montageträger ausgewechselt werden muss.

Die DE 198 56 350 B4 offenbart ein Frontendmodul, bei der der Montageträger einen Schlossquerträger, einen Stoßfängerquerträger sowie vertikale Stahlstreben, die zusammen eine versteifende Stahlstruktur bilden, aufweist. Der Schlossquerträger und der Stoßfängerquerträger sind über die vertikalen Stahlstreben fest miteinander verbunden. Zwei Hilfsträger, die an den Stahlstreben und/oder dem Schlossquerträger befestigt sind, weisen Aufnahmen, Vorsprünge und Arme auf, um Funktionsbauteile an den Hilfsträgern zu befestigen. Nachteilig hierbei ist, dass nur die Hilfsträger im Falle eines Unfalls ausgetauscht werden können, nicht jedoch Teile der Stahlstruktur. Weiterhin ist nachteilig, dass es sich bei den Hilfsträgern um zusätzlich zu der Stahlstruktur herzustellende Teile handelt, so dass Material verbraucht wird, ohne dass die Hilfsträger eine versteifende Funktion übernehmen.

In der WO 2009/072673 A1 wird ein Montageträger offenbart, der einen oberen Querträger, einen unteren Querträger und zumindest zwei Vertikalträger aufweist. Insbesondere können dabei die Vertikalträger jeweils zweiteilig ausgestaltet sein. Nachteilig hierbei ist, dass zumindest Teile der Vertikalträger mit zumindest dem unteren Querträger verschweißt sein können. Ein einfaches Auswechseln ist dadurch nicht möglich.

Es ist daher Aufgabe der Erfindung, ein Frontendmodul bereitzustellen, bei dem die genannten Nachteile vermieden werden, insbesondere ein Frontendmodul zu schaffen, bei dem ein beschädigtes, insbesondere versteifendes und/oder tragendes Bauteil des Frontendmoduls, das z. B. durch einen Unfall verformt worden ist oder bereits fehlerhaft hergestellt worden ist, ausgetauscht werden kann, ohne einen großen Materialverlust zu erleiden.

Zur Lösung der Aufgabe wird ein Frontendmodul mit sämtlichen Merkmalen des Anspruches 1, insbesondere des kennzeichnenden Teils, vorgeschlagen. Vorteilhafte Weiterbildungen des Frontendmoduls sind in den abhängigen Ansprüchen angegeben.

Erfindungsgemäß ist vorgesehen, dass der Vertikalträger aus mehreren Elementen ausgebildet ist. Das erfindungsgemäße Frontendmodul weist einen Montageträger u. a. zur Versteifung der Fahrzeugstruktur auf, wobei der Montageträger als versteifende und/oder tragende Bauteile einen oberen Querträger, einen unteren Querträger und Vertikalträger aufweist. Hierbei verbindet insbesondere ein erster Vertikalträger linksseitig den oberen mit dem unteren Querträger und ein zweiter Vertikalträger rechtsseitig den oberen und unteren Querträger miteinander. Wird ein Vertikalträger während der Montage oder durch einen Unfall oder Materialermüdung während der Benutzung des Kraffahrzeuges beschädigt, so genügt es durch den erfindungsgemäßen Aufbau des Vertikalträgers aus mehreren voneinander unabhängigen Elementen, nur das beschädigte Element des Vertikalträgers anstelle des gesamten Vertikalträgers oder des gesamten Frontendmoduls auszutauschen. Hierdurch können einzelne unbeschädigte Elemente des Vertikaltägers weiterverwendet werden und somit Material eingespart werden. Auch wenn ein fehlerhaftes Element vor der Montage erkannt wird, können die intakten anderen Elemente verwendet und das fehlerhafte Element vor der Montage ausgetauscht werden. Somit muss nur das fehlerhafte Element verworfen werden, was ebenfalls zu einer Materialeinsparung führt. Die Elemente als Teil des Vertikalträgers dienen dabei gleichzeitig zur Versteifung der Fahrzeugstruktur und gegebenenfalls zur Aufnahme der Kräfte einer Motorklappe und/oder der Kräfte von Funktionsbauteilen.

Vorzugsweise ist vorgesehen, dass benachbarte Elemente des Vertikalträgers untereinander und/oder der Vertikalträger mit dem oberen Querträger und/oder mit dem unteren Querträger reversibel lösbar miteinander verbunden sind. Hierdurch wird ein Austausch der einzelnen Elemente des Vertikalträgers oder eines Trägers vereinfacht. Die jeweilige Verbindung kann form- und/oder kraftschlüssig, z. B. durch eine Schraube, eine Clipverbindung oder einen Bajonettverschluss, ausgeführt sein.

Der Vertikalträger kann mindestens ein Verbindungselement aufweisen, um ein Funktionsbauteil an dem Vertikalträger zu befestigen. Hierbei kann ein Funktionsbauteil ein Bauelement sein, dass eine im Vorderwagen übliche Funktion, wie etwa eine Beleuchtung des Kraftfahrzeuges, ein Verschließen des Kraftfahrzeuges, eine Kühlung eines Motors des Kraftfahrzeuges oder ein Abfangen eines Stoßes an dem Kraftfahrzeug, wahrnimmt. Insbesondere kann das Funktionsbauteil ein Elektrik- oder Elektronikbauteil, ein Sensor, ein Kühler einschließlich einer Luftführung, ein Scheinwerfer, ein Hilfsträger zur Befestigung eines Scheinwerfers, ein Stoßfänger, ein Stoßfängerüberzug, ein Motorklappenschloss oder ein Horn bzw. eine Hupe sein. Insbesondere können mehrere Aufnahmen für mehrere Funktionsteile am Vertikalträger vorgesehen sein. Ein Verbindungselement kann jeweils z. B. eine Aufnahme für ein Teil des Funktionsbauteils, eine Fläche, ein Vorsprung zur Einführung in ein Teil des Funktionsbauteils oder ein Befestigungspunkt, z. B: in Form einer Bohrung für eine Schraube, sein.

Durch den Aufbau des Montageträgers aus Quer- und Vertikalträgern und durch den Aufbau des Vertikalträgers aus mehreren Elementen ist eine Austauschbarkeit der einzelnen Elemente für unterschiedliche Kraftfahrzeugtypen im Sinne eines Baukastensystems mit standardisierten Elementen und Bauteilen gegeben. Verändern sich die Maße der Quer- oder Vertikalträger, so muss nicht der gesamte Montageträger variiert werden, sondern lediglich die sich verändernden Quer- oder Vertikalträger. Insbesondere kann vorgesehen sein, dass die Querträger in Größe und Design einem jeweiligen Kraftfahrzeugtyp angepasst werden, während die Vertikalträger unverändert bleiben. Zusätzlich oder alternativ kann vorgesehen sein, in einem Frontendmodul eines anderen Kraftfahrzeugtyps ein Funktionsbauteil zu variieren. Hierbei kann es ausreichend sein, nur das Element des Vertikalträgers, das das entsprechende Verbindungselement für das Funktionsbauteil enthält, auszuwechseln. Wird der Scheinwerfer variiert, so kann es sogar ausreichend sein, den Hilfsträger zu verändern und die Vertikalträger unverändert zu belassen. Hierdurch können gleichbleibende Bauteile und/oder Elemente standardisiert und in größerer Stückzahl gefertigt werden, so dass die Herstellungskosten sinken.

Die Vertikalträger weisen jeweils ein oberes Befestigungselement, ein unteres Befestigungselement und ein Zwischenelement als Elemente auf. Hierbei ist das obere Befestigungselement über das Zwischenelement an dem unteren Befestigungselement verbunden. Der Aufbau des Vertikalträgers aus drei verschiedenen Elementen ermöglicht, dass bei einem Austausch eines Elementes zwei Drittel des Vertikalträgers bestehen bleiben kann. Die einzelnen Elemente können jeweils aus je unterschiedlichen Materialien hergestellt werden, so dass der Vertikalträger insgesamt mehrerer Materialien, die jeweils individuell der Funktion des einzelnen Elementes angepasst werden können, enthalten kann. Sind nur bei einem Teil der Elemente kostenintensive Materialien notwendig, so können die übrigen Elemente vorteilhafterweise aus kostenreduzierten Materialien hergestellt werden. Die einzelnen Elemente können ebenfalls mehrere Materialien aufweisen.

Insbesondere ist es vorgesehen, dass das obere Befestigungselement ein erstes Verbindungselement für ein Motorklappenschloss aufweist. Dabei kann sowohl in dem oberen Befestigungselement des rechten als auch des linken Vertikalträgers ein Motorklappenschloss vorgesehen sein. Alternativ ist nur ein Motorklappenschloss in einem der oberen Befestigungselemente vorgesehen. Durch die Anordnung des Motorklappenschlosses in dem oberen Befestigungselement ist das Motorklappenschloss seitlich im Montageträger angeordnet, so dass ein in das Motorklappenschloss eingreifender Fanghaken einer Motorhaube bei geschlossener Motorhaube ebenfalls seitlich an dem Montageträger angeordnet ist. Die durch den Fanghaken eingeleiteten Kräfte werden in das obere Befestigungselement und nicht in den oberen Querträger eingeleitet, so dass sich die in den oberen Querträger eingeleiteten Momente reduzieren. Bei dem oberen Querträger kann daher auf eine Verrippung und einen großen Querschnitt des oberen Querträgers verzichtet werden, so dass der erfindungsgemäße obere Querträger einen geringeren Platzbedarf hat. Weiterhin kann der erfindungsgemäße obere Querträger aus einem kostengünstigeren Material, z. B. Kunststoff, hergestellt werden. Das obere Befestigungselement, das jedoch geringere räumliche Maße als der obere Querträger beansprucht, kann zur Aufnahme der durch den Fanghaken in das obere Befestigungselement eingeleiteten Kräfte und/oder Momente metallisches Material aufweisen, wobei insbesondere ein Grundkörper des oberen Befestigungselementes metallisches Material enthält und z. B. aus Aluminium hergestellt ist. Das obere Befestigungselement kann Verrippungen aufweisen.

Es ist vorteilhaft, weitere Verbindungselemente in das obere Befestigungselement zu integrieren und damit weitere Kräfte und/oder Momente in das obere Befestigungselement einzutragen, da das Befestigungselement auf Grund des Motorklappenschlosses bereits metallisches Material aufweist. In dem oberen Befestigungselement können daher mehrere Verbindungselemente angeordnet sein. Hierdurch werden die Verbindungselemente auf das obere Befestigungselement konzentriert, wodurch die anderen Elemente entlastet werden. Das obere Befestigungselement kann daher ebenfalls ein zweites Verbindungselement für den Hilfsträger und/oder ein drittes Verbindungselement für einen Kühler aufweisen. Für das zweite und/oder das dritte Verbindungselement selber können kostengünstigere Materialien wie Kunststoff verwendet werden, so dass das obere Befestigungselement mehrere Materialien aufweisen kann. Beispielsweise kann das obere Befestigungselement ein Aluminium-Kunststoff-Hybridelement sein.

Das untere Befestigungselement kann ein viertes Verbindungselement aufweisen, das zur Befestigung eines Kühlers dient. Es kann ausreichend sein, das untere Befestigungselement vollständig aus Kunststoff zu fertigen.

Das obere und das untere Befestigungselement können Verbindungsmittel zur Befestigung an dem Zwischenelement aufweisen. Darüber hinaus kann das obere Befestigungselement ein Verbindungsmittel für den oberen Querträger und das untere Befestigungselement ein Verbindungsmittel für den unteren Querträger aufweisen.

Es ist denkbar, dass das Zwischenelement eine Platte aus Metall aufweist, an der ein Energieabsorptionselement, das als Crashbox dient, befestigt, insbesondere angeschweißt ist. Aus dem Stand der Technik ist bereits eine ähnliche Platte mit einem Energieabsorptionselement bekannt, wobei die Platte als Flansch zum Befestigen an einem Montageträger dient. Erfindungsgemäß jedoch ersetzt die Platte einen Teil des Montageträgers, wodurch Material eingespart werden kann. Das heißt, die Platte übernimmt erfindungsgemäß eine tragende und/oder versteifende Funktion. Insbesondere kann das Zwischenelement nur die Platte mit dem Energieabsorptionselement sein. Das Zwischenelement kann Verbindungsmittel für die Verbindung mit dem oberen und/oder unteren Befestigungselement aufweisen. Das Energieabsorptionselement kann auf der zu der Platte abgewandten Seite ein Verbindungselement, insbesondere eine Befestigungsaufnahme aufweisen, mit der es mit dem Stoßfänger verbunden ist. Es kann vorgesehen sein, dass der Montageträger über die Platte mit der tragenden Struktur, insbesondere der fahrzeugseitigen Karosserie verbunden ist.

Der obere Querträger kann eine Abdichtung und/oder einen Kaltluftanschluss für den Kühler aufweisen. In den oberen Querträger kann ein Sensor integriert sein. Zudem kann der obere Querträger einen Stoßfängerüberzug und/oder ein Kühlergitter abstützen. Um das Gewicht des Stoßfängerüberzuges weiterleiten zu können, kann jeweils eine Strebe des oberen Querträgers zu jedem Energieabsorptionselement führen, wobei die Strebe insbesondere über ein Abstützelement an dem Energieabsorptionselement angeordnet ist. Auch der untere Querträger kann mit dem Stoßfängerüberzug verbunden sein.

Die Aufgabe der Erfindung wird auch durch einen erfindungsgemäßen Montageträger gelöst, der ebenfalls unter Schutz gestellt wird.

Weitere die Erfindung verbessernde Maßnahmen ergeben sich aus der nachfolgenden Beschreibung zu Ausführungsbeispielen der Erfindung, welche in den Figuren schematisch dargestellt sind. Sämtliche aus den Ansprüchen, der Beschreibung oder der Zeichnung hervorgehenden Merkmale und/oder Vorteile, einschließlich konstruktiver Einzelheiten, räumliche Anordnung und Verfahrensschritte, können sowohl für sich als auch in den verschiedensten Kombinationen erfindungswesentlich sein. Es zeigen:
- Fig. 1: eine schematische Skizze eines erfindungsgemäßen Montageträgers,
- Fig. 2: einen erfindungsgemäßen Montageträger, der beispielhaft auf einer Seite an einer fahrzeugseitigen Karosserie befestigt ist,
- Fig. 3: einen Ausschnitt aus dem erfindungsgemäßen Montageträger mit einem Hilfsträger,
- Fig. 4: eine Explosionsdarstellung des erfindungsgemäßen Montageträgers mit Hilfsträgern und einem Motorklappenschloss,
- Fig. 5: einen erfindungsgemäßen Vertikalträger mit einem Hilfsträger und einem unteren Querträger und
- Fig. 6: ein erfindungsgemäßes oberes Befestigungselement.

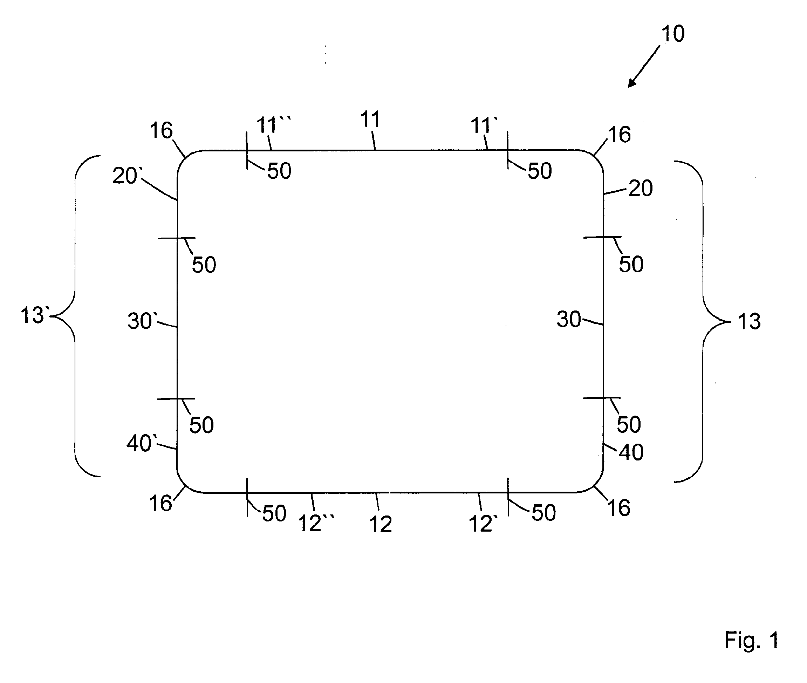

Fig. 1 ist eine schematische Skizze eines erfindungsgemäßen Montageträgers 10 eines Frontendmoduls. Der Montageträger 10 weist einen oberen Querträger 11 und einen unteren Querträger 12 auf. Der obere Querträger 11 weist zwei Querträgerenden 11', 11"und der untere Querträger 12 zwei Querträgerenden 12', 12" auf. Jeweils ein Querträgerende 11', 11" des oberen Querträgers 11 und ein sich auf derselben Seite befindendes Querträgerende 12', 12" des unteren Querträgers 12 sind über je einen Vertikalträger 13, 13' miteinander verbunden. Hierdurch erhält der Montageträger 10 eine im Wesentlichen rechteckige Gestalt. Abweichungen von der rechteckigen Gestalt, z. B. durch abgerundete Ecken 16, sind möglich. Ebenso können die Vertikalträger 13, 13' oder der obere und/oder der untere Querträger 11, 12 U-förmig ausgestaltet sein und die Ecken 16 des Montageträgers 10 umfassen. In Fig. 1 umfassen beispielhaft die Vertikalträger 13, 13' die Ecken 16 des "Rechtecks".

Die beiden Vertikalträger 13, 13' sind spiegelbildlich zueinander aufgebaut. Die Vertikalträger 13, 13' sind jeweils in drei Elemente unterteilt: ein oberes Befestigungselement 20, 20', ein Zwischenelement 30, 30' und ein unteres Befestigungselement 40, 40'. Hierbei sind die beiden oberen Befestigungselemente 20, 20' jeweils spiegelbildlich, die beiden Zwischenelemente 30, 30' jeweils spiegelbildlich und die beiden unteren Befestigungselemente 40, 40' jeweils spiegelbildlich zueinander aufgebaut. Im Folgenden zeigt jeweils ein gleiches, aber mit einem Strich versehenes Bezugszeichen an, dass es sich um eine baugleiche, aber spiegelverkehrte Vorrichtung handelt. Die oberen und die unteren Befestigungselemente 20, 20', 40, 40' sind L-förmig ausgestaltet, damit die Vertikalträger 13, 13' insgesamt U-förmig sein können.

Die oberen Befestigungselemente 20, 20' sind mit dem oberen Querträger 11, die unteren Befestigungselemente 40, 40' sind mit dem unteren Querträger 12 und die Zwischenelemente 30, 30' jeweils mit einem oberen und einem unteren Befestigungselement 20, 20', 40, 40' an schematisch angedeuteten Verbindungsstellen 50 reversibel lösbar verbunden. Hierdurch kann bei Beschädigung eines Elementes 20, 20', 30, 30', 40, 40' oder des oberen oder unteren Querträgers 11, 12 jeweils nur das beschädigte Element 20, 20', 30, 30', 40, 40' oder der beschädigte Querträger 11, 12 ausgetauscht werden. Bei Fehlern in der Herstellung muss ebenfalls nur das fehlerhafte Element 20, 20', 30, 30', 40, 40' oder der fehlerhafte Querträger 11, 12 verworfen werden, so dass Material und Kosten eingespart werden. Wird für einen anderen Kraftfahrzeugtyp oder eine andere Kraftfahrzeugvariante das Frontendmodul variiert und daher beispielsweise ein anderer oberer Querträger 11 verwendet, so können die Vertikalträger 13, 13' unverändert bleiben. Ist für den anderen Kraftfahrzeugtyp ein anderes oberes Befestigungselement 20, 20' vonnöten, so können alle weiteren Elemente 30, 30', 40, 40' und die Querträger 11, 12 auch in dem anderen Kraftfahrzeugtyp oder der anderen Kraftfahrzeugvariante verwendet werden. Hierdurch können die Fertigung vereinfacht, größere Stückzahlen hergestellt und Kosten reduziert werden.

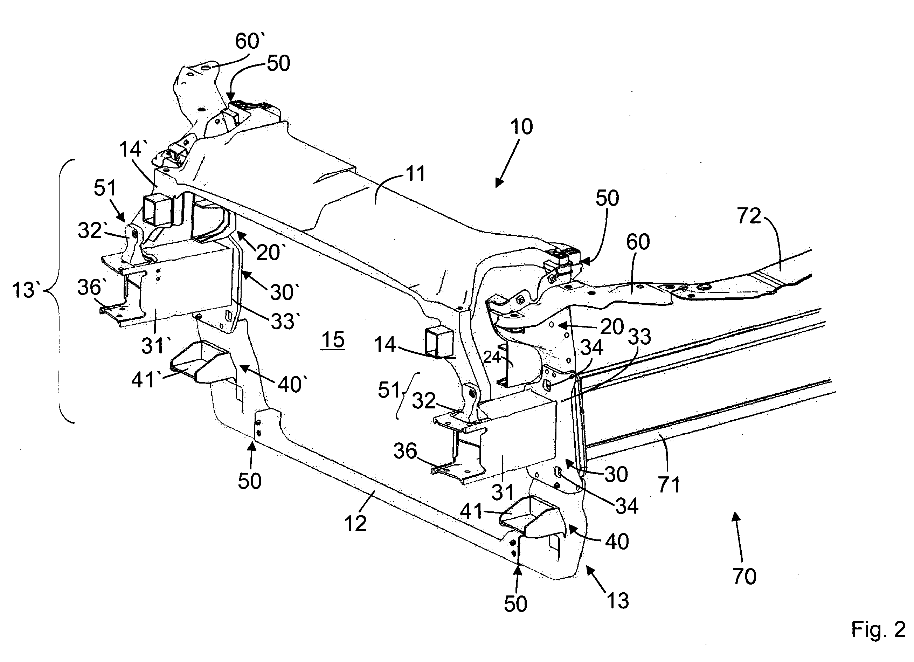

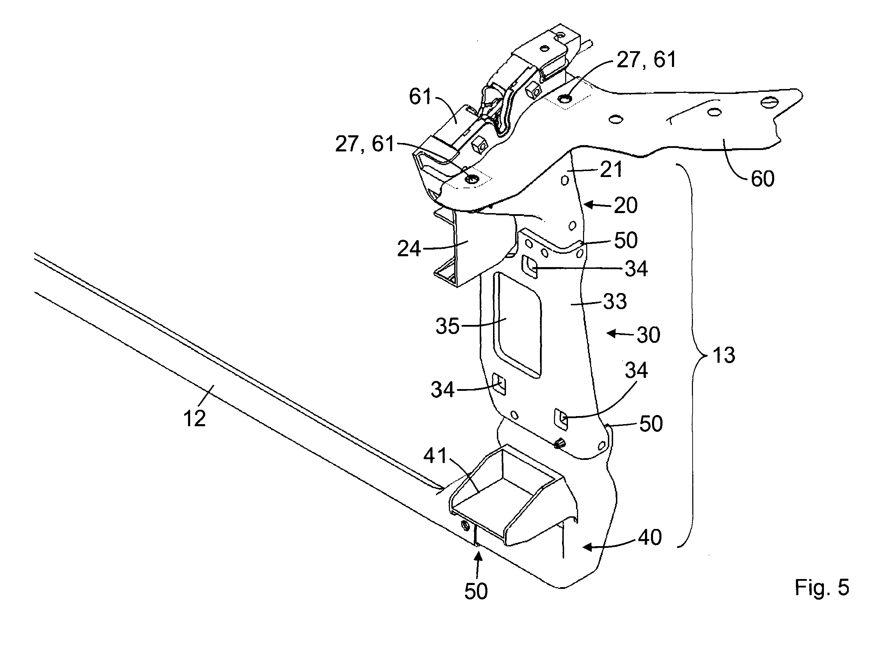

Fig. 2 zeigt erneut den erfindungsgemäßen Montageträger 10 mit einem oberen Querträger 11 und einem unteren Querträger 12 sowie den beiden Vertikalträgern 13, 13', die zusammen einen im Wesentlichen rechteckigen Rahmen bilden. Hierbei entsteht ein Einbauraum 15, der einen nicht dargestellten Kühler aufnimmt. Die Vertikalträger 13, 13' sind jeweils aus einem oberen Befestigungselement 20, 20' und einem unteren Befestigungselement 40, 40', die durch ein Zwischenelement 30, 30' als Element des Vertikalträgers 13, 13' verbunden sind, aufgebaut. In Fig. 2 ist zudem dargestellt, wie sich der Montageträger 10 an eine fahrzeugseitige Karosserie 70 als eine tragende Struktur des Kraftfahrzeuges anschließt, wobei dies beispielhaft für den Vertikalträger 13 dargestellt ist, dieses spiegelbildlich jedoch im gleichen Maße für den Vertikalträger 13' gilt (nicht dargestellt). Ein Längsträger 71 der fahrzeugseitigen Karosserie 70 ist hierbei mit dem Zwischenelement 30 verbunden. Hierzu weist eine Platte 33 des Zwischenelementes 30, die in Fig. 5 vergrößert dargestellt ist, Öffnungen 34 auf, durch die die Platte 33 mit dem Längsträger 71 mit nicht dargestellten Schrauben verbunden wird. Weiterhin ist das obere Befestigungselement 20 über einen Hilfsträger 60, der zur Befestigung eines nicht dargestellten Scheinwerfers dient, mit einem weiteren Träger 72 der fahrzeugseitigen Karosserie 70 verbunden. Hierdurch entsteht ein Zugverbund für den Längsträger 71 und den weiteren Träger 72, die über das obere Befestigungselement 20 und das Zwischenelement 30 miteinander verbunden sind.

An jeder Platte 33, 33' schließt sich jeweils ein Energieabsorptionselement 31, 31' an. Das Energieabsorptionselement 31, 31' weist jeweils eine Befestigungsaufnahme 36, 36' auf, um einen nicht dargestellten Stoßfänger an dem Montageträger 10 zu befestigen. Wirkt als Folge eines Unfalls eine Kraft auf den Stoßfänger, so verformt sich das Energieabsorptionselement 31, 31' und schützt den dahinter liegenden Längsträger 71. Das Energieabsorptionselement 31, 31' dient damit als Crashbox.

Der Montageträger 10 bildet zusammen mit dem Kühler, dem Scheinwerfer, dem Hilfsträger, dem Motorklappenschloss und dem Stoßfänger das Frontendmodul.

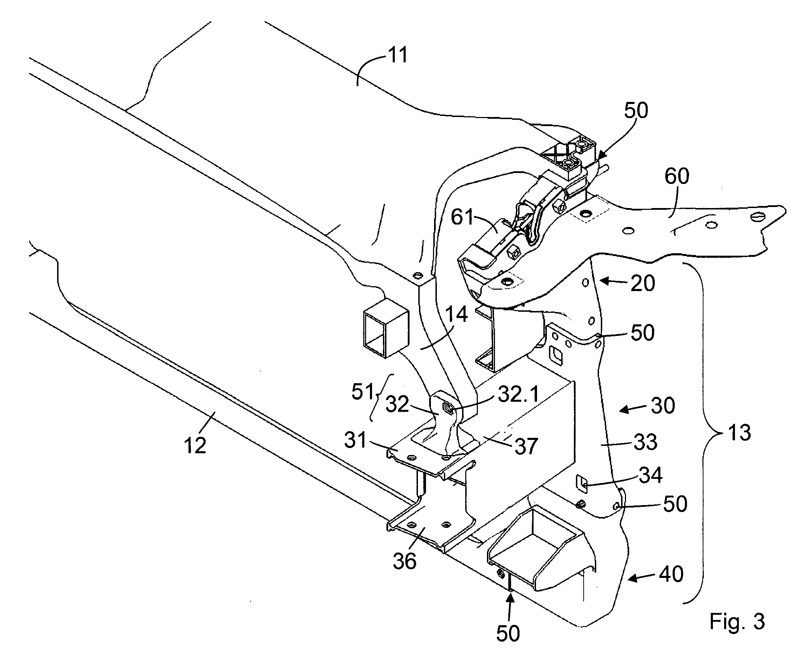

Fig. 3 zeigt einen Ausschnitt aus der rechten Hälfte des erfindungsgemäßen Montageträgers 10 aus Fig. 2, wobei die nun folgende Beschreibung für die nicht dargestellte linke Hälfte des Montageträgers 10 analog gilt. Die Bezugszeichen aus Fig. 2 werden für gleiche Vorrichtungen übernommen. Neben den in Fig. 1 dargestellten Verbindungsstellen 50 ist der obere Querträger 11 noch über eine weitere Verbindungsstelle 51 mit dem Vertikalträger 13 verbunden. Hierzu weist der Querträger 11 eine Strebe 14 auf, die die Gewichtskraft eines nicht dargestellten, an dem oberen Querträger 11 befestigten Stoßfängerüberzuges an das Energieabsorptionselement 31, das in seiner Funktion als Crashbox bereits steif ausgestaltet ist, ableitet.

Die Strebe 14 ist über ein Abstützelement 32 an dem Energieabsorptionselement 31 angeordnet. Das Abstützelement 32 ist in einer in Fig. 3 nur angedeuteten Führung 37 des Energieabsorptionselements 31 angeordnet, wodurch eine Schwächung des Energieabsorptionselementes 31 auf Grund von andernfalls nötigen Befestigungsbohrungen oder Schweißungen verhindert wird. Das Abstützelement 32 ist in der Führung 37 beweglich angeordnet, so dass zusätzlich ein Toleranzausgleich in Richtung der Führung 37 zwischen der Strebe 14 und dem Energieabsorptionselement 31 möglich ist. Das Abstützelement 32 kann mit einer in Richtung der Führung 37 zeigenden, nicht dargestellten Schraube an der Strebe 14 befestigt sein. Um einen Toleranzausgleich zwischen der Strebe 14 und dem Energieabsorptionselement 31 senkrecht zur Richtung der Führung 37 zu ermöglichen, weist das Abstützelement 32 eine Öffnung 32.1 senkrecht zur Richtung der Führung 37 auf, durch die die Schraube geführt wird. Hierbei ist die Öffnung 32.1 deutlich größer als der Schraubenhals jedoch kleiner als der Schraubenkopf ausgeführt. Beim Festdrehen der Schraube wird das Abstützelement 32 zwischen dem Schraubenkopf und der Strebe 14 eingeklemmt, wobei der Toleranzausgleich senkrecht zur Richtung der Führung 37 durch die unterschiedlichen Positionen des Schraubenhalses in der Öffnung 32.1 ermöglicht wird. Ein Toleranzausgleich in alle drei karthesischen Raumrichtungen kann somit durch das Festziehen nur einer Schraube erfolgen.

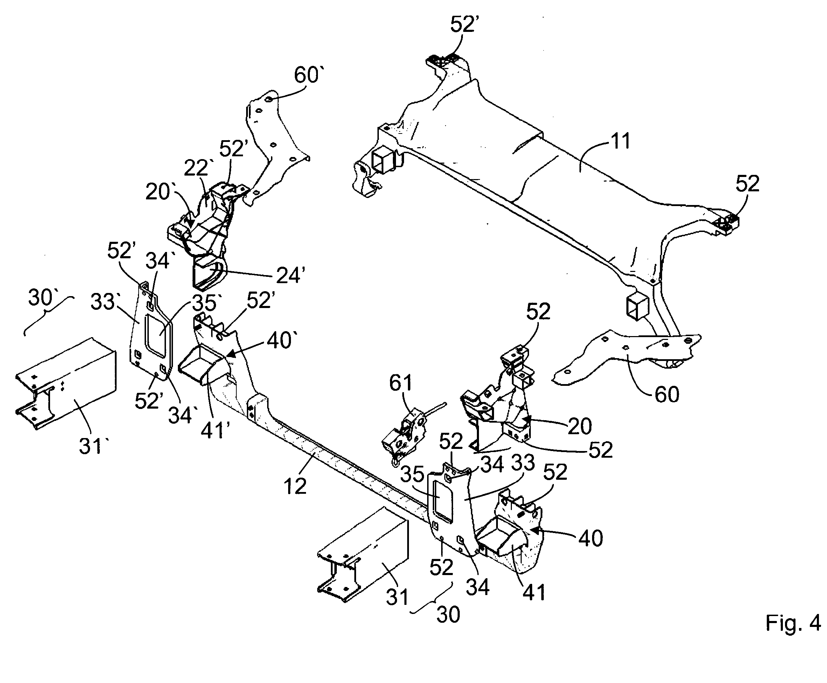

Fig. 4 zeigt eine Explosionsdarstellung des erfindungsgemäßen Montageträgers 10 aus Fig. 2 mit den Hilfsträgern 60, 60' und einem Motorklappenschloss 61, bei der nur die unteren Befestigungselemente 40, 40' mit dem unteren Querträger 12 verbunden sind. Hierbei sind Verbindungsmittel 52, 52' die die Verbindungsstellen 50 zwischen den Elementen (20, 20', 30, 30', 40, 40') untereinander und die Verbindungsstellen zwischen den Querträgern (11, 12) und Vertikalträgern (13, 13') ausbilden, abgebildet. Die Bezugszeichen aus Fig. 2 und Fig. 3 gelten auch für entsprechende Vorrichtungen der Fig. 4.

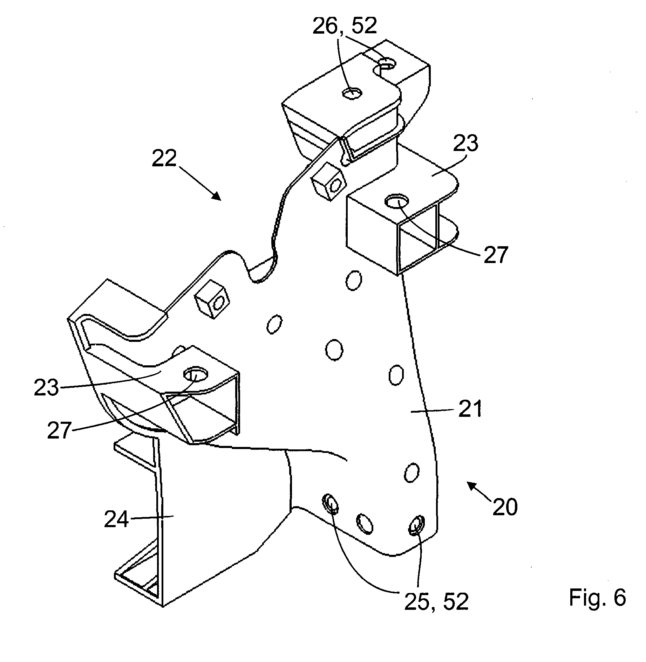

Fig. 5 stellt ein unteres Befestigungselement 40 mit einem daran befestigten unteren Querträger 12, ein Zwischenelement 30 ohne Energieabsorptionselement 31 und ein oberes Befestigungselement 20 mit dem daran angeordneten Motorklappenschloss 61 und dem Hilfsträger 60 aus Fig. 3 dar. Die in Fig. 2 bis 4 erläuterten Vorrichtungen werden in Fig. 5 mit den gleichen Bezugszeichen versehen. Das obere Befestigungselement 20 weist ein als eine einseitig offene Aufnahme ausgeformtes, erstes Verbindungselement 22 zur Aufnahme des Motorklappenschlosses 61, in das ein Fanghaken einer Motorklappe eingreifen kann, auf. Das erste Verbindungselement 22 ist in Fig. 6 dargestellt. Um die Kräfte, die vor allem im Fall des Missbrauchs über den Fanghaken in das obere Befestigungselement 20 eingeleitetet werden, aufzufangen, ist ein Grundkörper 21 des oberen Befestigungselementes 20 aus Metall, insbesondere aus Aluminium, hergestellt. Ein in Fig. 6 dargestelltes, als zwei Vorsprünge ausgeformtes, zweites Verbindungselement 23 kann von dem Hilfsträger 60 aufgenommen werden, wobei eine Befestigung des Hilfsträgers 60 an dem zweiten Verbindungselement 23 durch (nicht dargestellte) Schrauben, die durch Öffnungen 27 des zweiten Verbindungselementes 23 und Öffnungen 61 des Hilfsträgers 60, die mit den Öffnungen 27 fluchten, führen, ermöglicht wird. Ein drittes Verbindungselement 24 ist als eine Aufnahme ausgestaltet und kann mit einem (nicht dargestellten) Kühler verbunden werden. Hierbei ermöglichen das erste, zweite und das dritte Verbindungselement 22, 23, 24 nicht nur eine Befestigung des jeweiligen Funktionsbauteils, sondern geben auch eine räumliche Anordnung und Richtung für das jeweilige Funktionsbauteil vor. Das erste, zweite und/oder das dritte Verbindungselement 22, 23, 24 kann aus Gründen der Kosten- und Gewichtsreduktion aus Kunststoff gefertigt sein, so dass das obere Befestigungselement 20 zwei unterschiedliche Materialien aufweist. Der Hilfsträger 60 ist vorzugsweise aus Aluminium oder Stahl hergestellt.

Das untere Befestigungselement 40 ist aus Kunststoff hergestellt und enthält ein viertes Verbindungselement 41, das als eine Aufnahme ausgebildet ist. Das vierte Verbindungselement 41 dient ebenfalls der Befestigung und der Ausrichtung des (nicht dargestellten) Kühlers.

Das Zwischenelement 30 ist über die Verbindungsstellen 50 mit dem oberen und dem unteren Befestigungselement 20, 40 verbunden. Das Zwischenelement 30 weist eine Platte 33 aus Metall, insbesondere aus Aluminium, auf. Die Platte 33 weist einen Durchbruch 35 auf, an dem das Energieabsorptionselement 31 befestigt, insbesondere angeschweißt ist. Weiterhin weist die Platte 33 Öffnungen 34 zur Befestigung des Montageträgers 10 an dem Längsträger 71 der fahrzeugseitigen Karosserie 70 (s. Fig. 2) auf. Die Platte 33 dient erfindungsgemäß nicht als Flansch des Energieabsorptionselementes 31 an den Montageträger 10, sondern die Platte 33 ist selber Teil des Montageträgers 10 und hat eine tragende und/oder versteifende Funktion.

Fig. 6 stellt eine vergrößerte Ansicht des oberen Befestigungselementes 20 aus Fig. 5 dar, wobei die Bezugszeichen übernommen werden. Hierbei sind in Fig. 6 jedoch der Hilfsträger 60 und das Motorklappenschloss 61 nicht angeordnet, so dass das erste Verbindungselement 22 und das zweite Verbindungselement 23 dargestellt sind. Ferner sind Öffnungen 25, die eine Verbindung zu dem Zwischenelement 30 ermöglichen und damit als Verbindungsmittel 52 dienen, und Öffnungen 26, die als Verbindungsmittel 52 zu dem oberen Querträger 11 dienen, dargestellt.

### Bezugszeichenliste

- 10: Montageträger
- 11: oberer Querträger
- 11', 11": Enden von 11
- 12: unterer Querträger
- 12', 12": Enden von 12
- 13, 13': Vertikalträger
- 14, 14': Strebe
- 15: Einbauraum
- 16: Ecke
- 20, 20': oberes Befestigungselement
- 21: Grundkörper von 20
- 22, 22': erstes Verbindungselement, Aufnahme
- 23: zweites Verbindungselement, Vorsprünge
- 24, 24': drittes Verbindungselement, Aufnahme
- 25: Öffnungen
- 26: Öffnungen
- 27: Öffnungen
- 30, 30': Zwischenelement
- 31, 31': Energieabsorptionselement
- 32, 32': Abstützelement
- 32.1: Öffnung
- 33, 33': Platte
- 34, 34': Öffnung
- 35, 35': Durchbruch
- 36, 36': Befestigungsaufnahme
- 37: Führung
- 40, 40': unteres Befestigungselement
- 41, 41': viertes Verbindungselement
- 50: Verbindungsstelle
- 51: Verbindungsstelle
- 52, 52': Verbindungsmittel
- 60, 60': Hilfsträger
- 61: Motorklappenschloss
- 70: fahrzeugseitige Karosserie
- 71: Längsträger
- 72: Träger

## Patentansprüche

1. Frontendmodul für ein Kraftfahrzeug, mit
einem Montageträger (10), an dem Funktionsbauteile (60, 60', 61) des Kraftfahrzeuges angeordnet sind und der an einer tragenden Struktur (70) des Fahrzeuges befestigbar ist, wobei
der Montageträger (10) einen oberen Querträger (11) und einen unteren Querträger (12) aufweist, die miteinander über Vertikalträger (13, 13') verbunden sind,
die Vertikalträger (13, 13') aus mehreren Elementen (20, 20', 30, 30', 40, 40') ausgebildet sind,
**dadurch gekennzeichnet, dass**
die Vertikalträger (13, 13') jeweils ein oberes Befestigungselement (20, 20') und ein unteres Befestigungselement (40, 40') aufweisen, die über ein Zwischenelement (30, 30') miteinander verbunden sind.

2. Frontendmodul nach Anspruch 1,
**dadurch gekennzeichnet,**
**dass** benachbarte Elemente (20, 20', 30, 30', 40, 40') reversibel lösbar miteinander verbunden sind.

3. Frontendmodul nach Anspruch 1 oder 2,
**dadurch gekennzeichnet,**
**dass** mindestens ein Querträger (11, 12) mit mindestens einem Vertikalträger (13, 13') reversibel lösbar miteinander verbunden ist.

4. Frontendmodul nach einem der vorhergehenden Ansprüche ,
**dadurch gekennzeichnet,**
**dass** der Vertikalträger (13, 13') mindestens ein Verbindungselement (22, 22', 23, 24, 24', 41, 41') aufweist, an der ein Funktionsbauteil des Kraftfahrzeuges befestigbar ist, wobei das Funktionsbauteil insbesondere ein Elektrik- oder Elektronikbauteil, ein Sensor, ein Kühler einschließlich Luftführung, ein Scheinwerfer, ein Hilfsträger (60, 60') zur Befestigung des Scheinwerfers an dem Vertikalträger (13, 13'), ein Motorklappenschloss (61), ein Stoßfänger, ein Stoßfängerüberzug oder ein Horn ist.

5. Frontendmodul nach einem der vorhergehenden Ansprüche,
**dadurch gekennzeichnet,**
**dass** das obere Befestigungselement (20, 20') mindestens zwei Materialien aufweist, wobei insbesondere der Grundkörper (21) des Befestigungselements (20, 20') metallisches Material aufweist, wobei das obere Befestigungselement (20, 20') mindestens ein Verbindungselement (22, 22', 23, 24, 24') aus Kunststoff aufweist.

6. Frontendmodul nach einem der vorhergehenden Ansprüche,
**dadurch gekennzeichnet,**
**dass** in dem oberen Befestigungselement (20, 20') mehrere Verbindungselemente (22, 22', 23, 24, 24') angeordnet sind.

7. Frontendmodul nach einem der vorhergehenden Ansprüche,
**dadurch gekennzeichnet,**
**dass** der Hilfsträger (60, 60'), an dem der Scheinwerfer angeordnet ist, am oberen Befestigungselement (20, 20'), insbesondere über ein Verbindungselement (23), angeordnet ist.

8. Frontendmodul nach einem der vorhergehenden Ansprüche,
**dadurch gekennzeichnet,**
**dass** der Kühler am oberen Befestigungselement (20, 20') über ein Verbindungselement (24, 24') befestigt ist.

9. Frontendmodul nach einem der vorhergehenden Ansprüche,
**dadurch gekennzeichnet,**
**dass** das Motorklappenschloss (61) über ein Verbindungselement (22, 22') am oberen Befestigungselement (20, 20') befestigt ist.

10. Frontendmodul nach einem der vorhergehenden Ansprüche,
**dadurch gekennzeichnet,**
**dass** das Zwischenelement (30, 30') eine metallische Platte (33, 33') aufweist, an dem ein Energieabsorptionselement (31, 31') befestigt ist.

11. Frontendmodul nach Anspruch 10,
**dadurch gekennzeichnet,**
**dass** der obere Querträger (11) zwei in Richtung des jeweiligen Zwischenelementes (30, 30') verlaufende Streben (14, 14') aufweist, wobei die Strebe (14, 14') jeweils am Energieabsorptionselement (31, 31') befestigt ist.

12. Frontendmodul nach einem der vorhergehenden Ansprüche,
**dadurch gekennzeichnet,**
**dass** das untere Befestigungselement (40, 40') ein Verbindungselement (41, 41') aufweist, an dem der Kühler befestigt ist.

13. Frontendmodul nach Anspruch 10 oder 11,
**dadurch gekennzeichnet,**
**dass** das Energieabsorptionselement (31, 31') an der der Platte (33, 33') abgewandten Seite mit einer Befestigungsaufnahme (36, 36') ausgebildet ist.

14. Montageträger (10) für ein Frontendmodul, **dadurch gekennzeichnet, dass** der Montageträger (10) nach einem der Ansprüche 1 bis 13 ausgebildet ist.

## Claims

1. Front module for a motor vehicle with
a cross member (10) at which functional construction elements (60, 60', 61) of the motor vehicle are assembled and which can be assembled at a bearing structure (70) of the vehicle, wherein
the cross memeber (10) comprises an upper cross beam (11) and a lower cross beam (12), which are jointly connected via vertical beams (13, 13'),
the vertical beams (13, 13') are composed from multiple elements (20, 20', 30, 30', 40, 40'),
**characterized in that**
the vertical beams (13, 13') each comprises an upper attachment element (20, 20') and a lower attachment element (40,40') which are jointly connected via a connecting element (30,30').

2. Front module according to claim 1,
**characterized in that**,
neighbouring elements (20, 20', 30, 30', 40, 40') are jointly connected in a reversibly removable way

3. Front module according to claims 1 or 2,
**characterized in that**,
at least one cross beam (11, 12) is jointly connected with at least one vertical beam (13, 13') in a reversibly removable manner.

4. Front module according to one of the preceding claims,
**characterized in that**,
the vertical beam (13, 13') comprises at least one connecting element (22, 22', 23, 24, 24', 41, 41'), at which a functional construction element of the motor vehicle is attachable, wherein the functional construction element is particularly an electric or electronic construction element, a sensor, a cooler including an air cooler, a headlight, an assistance beam (60, 60') for assembling the headlight at the vertical beam (13, 13'), a motor flap lock (61), a bumper, a bumper cover or a horn.

5. Front module according to one of the preceding claims,
**characterized in that**,
the upper attachment element (20, 20') comprises at least two materials wherein particularly the base body (21) of the attachment elements (20, 20') comprises metallic material, wherein the upper attachment element (20, 20') comprises at least one connecting element (22, 22', 23, 24, 24') made from plastic.

6. Front module according to one of the preceding claims,
**characterized in that**,
in the upper attachment element (20, 20') multiple connecting elements (22, 22', 23, 24, 24') are assembled.

7. Front module according to one of the preceding claims,
**characterized in that**,
the assistance beam (60, 60') is assembled at the headlight, at the upper attachment element (20, 20'), particularly above a connecting element (23).

8. Front module according to one of the preceding claims,
**characterized in that**,
the cooler is assembled at the upper attachment element (20, 20') via a connecting element (24. 24').

9. Front module according to one of the preceding claims,
**characterized in that**,
the motor flap lock (61) is assembled via the connecting element (22, 22') at the upper attachment element (20, 20'),

10. Front module according to one of the preceding claims,
**characterized in that**,
the connecting element (30, 30') comprises a metallic plate (33, 33'), at which an energy absorption element (31, 31') is connected.

11. Front module according to claim 10,
**characterized in that**,
the upper cross beam (11) comprises two rods (14, 14') which run into the direction of the respective connecting element (30, 30'), where the rods (14, 14') are each assembled at the energy absorption element (31,31').

12. Front module according to one of the preceding claims,
**characterized in that**,
the lower attachment element (40, 40') comprises a connecting element (41, 41'), at which the cooler is assembled.

13. Front module according to claim 10 or 11,
**characterized in that**,
the energy absorption element (31, 31') is established with an attachment acceptance (36, 36') at the side facing away from the plate (33, 33').

14. Cross beam (10) for a front module, **characterized in that**, the cross beam (10) is established according to one of the claims 1 to 13.

## Revendications

1. Module d'extrémité avant destiné à un véhicule automobile, comportant un support de montage (10) sur lequel des composants fonctionnels (60, 60', 61) du véhicule automobile sont disposés, et qui peut être fixé à une structure porteuse (70) dudit véhicule, sachant
que ledit support de montage (10) comprend un support transversal supérieur (11) et un support transversal inférieur (12), reliés l'un à l'autre par des supports verticaux (13, 13'), que lesdits supports verticaux (13, 13') sont réalisés en plusieurs éléments (20, 20', 30, 30', 40, 40'),
**caractérisé par le fait que**
les supports verticaux (13, 13') sont respectivement pourvus d'un élément supérieur de fixation (20, 20') et d'un élément inférieur de fixation (40, 40'), reliés l'un à l'autre par un élément intermédiaire (30, 30').

2. Module d'extrémité avant selon la revendication 1,
**caractérisé par le fait**
**que** des éléments voisins (20, 20', 30, 30', 40, 40') sont reliés les uns aux autres de manière libérable et réversible.

3. Module d'extrémité avant selon la revendication 1 ou 2,
**caractérisé par le fait**
**qu'**au moins un support transversal (11, 12) est relié à au moins un support vertical (13, 13'), de manière libérable et réversible.

4. Module d'extrémité avant selon l'une des revendications précédentes,
**caractérisé par le fait**
**que** le support vertical (13, 13') comporte au moins un élément de liaison (22, 22', 23, 24, 24', 41, 41') auquel un composant fonctionnel du véhicule automobile peut être fixé, ledit composant fonctionnel se présentant, en particulier, comme un composant électrique ou électronique, un détecteur, un radiateur incluant une amenée d'air, un projecteur, un support auxiliaire (60, 60') dédié à la fixation dudit projecteur audit support vertical (13, 13'), une serrure (61) de capot moteur, un amortisseur, un revêtement d'amortisseur, ou un avertisseur.

5. Module d'extrémité avant selon l'une des revendications précédentes,
**caractérisé par le fait**
**que** l'élément supérieur de fixation (20, 20') comprend au moins deux matériaux, sachant notamment que le corps de base (21) dudit élément de fixation (20, 20') présente un matériau métallique, ledit élément supérieur de fixation (20, 20') comportant au moins un élément de liaison (22, 22', 23, 24, 24') en matière plastique.

6. Module d'extrémité avant selon l'une des revendications précédentes,
**caractérisé par le fait**
**que** plusieurs éléments de liaison (22, 22', 23, 24, 24') sont disposés dans l'élément supérieur de fixation (20, 20').

7. Module d'extrémité avant selon l'une des revendications précédentes,
**caractérisé par le fait**
**que** le support auxiliaire (60, 60') sur lequel se trouve le projecteur est disposé sur l'élément supérieur de fixation (20, 20'), en particulier par l'intermédiaire d'un élément de liaison (23).

8. Module d'extrémité avant selon l'une des revendications précédentes,
**caractérisé par le fait**
**que** le radiateur est fixé à l'élément supérieur de fixation (20, 20') par l'intermédiaire d'un élément de liaison (24, 24').

9. Module d'extrémité avant selon l'une des revendications précédentes,
**caractérise par le fait**
**que** la serrure (61) du capot moteur est fixée à l'élément supérieur de fixation (20, 20') par l'intermédiaire d'un élément de liaison (22, 22').

10. Module d'extrémité avant selon l'une des revendications précédentes,
**caractérisé par le fait**
**que** l'élément intermédiaire (30, 30') présente une platine métallique (33, 33') à laquelle est fixé un élément (31, 31') d'absorption d'énergie.

11. Module d'extrémité avant selon la revendication 10,
**caractérisé par le fait**
**que** le support transversal supérieur (11) comprend deux pièces d'entretoisement (14, 14') s'étendant en direction de l'élément intermédiaire (30, 30') respectif, la pièce d'entretoisement (14, 14') respective étant fixée à l'élément (31, 31') d'absorption d'énergie.

12. Module d'extrémité avant selon l'une des revendications précédentes,
**caractérisé par le fait**
**que** l'élément inférieur de fixation (40, 40') présente un élément de liaison (41, 41') auquel le radiateur est fixé.

13. Module d'extrémité avant selon la revendication 10 ou 11,
**caractérisé par le fait**
**que** l'élément (31, 31') d'absorption d'énergie est doté d'un logement de fixation (36, 36') du côté pointant à l'opposé de la platine (33, 33').

14. Support de montage (10) dévolu à un module d'extrémité avant, **caractérisé par le fait que** ledit support de montage (10) est réalisé conformément l'une des revendications 1 à 13.
